(19) Europäisches Patentamt
European Patent Office
Office européen des brevets

(11) **EP 4 517 543 A1**

(12) **EUROPEAN PATENT APPLICATION**
published in accordance with Art. 153(4) EPC

(43) Date of publication:
**05.03.2025 Bulletin 2025/10**

(21) Application number: **22967538.4**

(22) Date of filing: **06.12.2022**

(51) International Patent Classification (IPC):
*G06F 15/16* (2006.01)      *G06T 7/00* (2017.01)

(52) Cooperative Patent Classification (CPC):
**G06F 15/16; G06T 7/00**

(86) International application number:
**PCT/CN2022/136990**

(87) International publication number:
**WO 2024/119377 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventors:
• **HUANG, Zhongbao**
  **Ningde, Fujian 352100 (CN)**
• **WANG, Zhongyang**
  **Ningde, Fujian 352100 (CN)**
• **WANG, Xinghua**
  **Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **LEAKAGE DETECTION METHOD AND APPARATUS, DEVICE, AND COMPUTER READABLE STORAGE MEDIUM**

(57)    The present application discloses a leakage detection method and apparatus, a device, and a computer readable storage medium. The method comprises: acquiring an image to be processed of a battery; performing identification on said image to obtain an adapter piece image and a top cap image; and according to the adapter piece image and the top cap image, determining whether the battery leaks. According to the present application, whether the assembly position between the adapter piece and the top cap satisfies the expected design can be determined according to a position offset; if the assembly position satisfies the expected design, it is determined that no leakage occurs in the battery; otherwise, it is determined that the battery leaks, which affects the service stability and safety of the battery. The mode of detecting, according to a position offset, whether a battery leaks can simply, efficiently and accurately detect whether a battery leaks, reducing the possibility of manual errors during manual inspection and improving the reliability of detection results.

```
                                          ┌─ S100
┌──────────────────────────────────────────┐
│   Acquiring an image to be processed of a battery   │
└──────────────────────────────────────────┘
                     │
                     ▼                    ┌─ S200
┌──────────────────────────────────────────┐
│ Recognizing the image to be processed to obtain an adapter piece image and a top cover image │
└──────────────────────────────────────────┘
                     │
                     ▼                    ┌─ S300
┌──────────────────────────────────────────┐
│ Determining whether there is liquid leakage in the battery according to the adapter piece image and the top cover image │
└──────────────────────────────────────────┘
```

FIG. 6

## Description

## Technical Field

The present application relates to the field of batteries, and specifically to a liquid leakage detection method, apparatus, and device, and a computer-readable storage medium.

## Background

The adapter piece and the top cover are important components of the power battery. The adapter piece is generally a stamping member, and the top cover usually consists of a terminal post, a sealing ring, a lower plastic, and a top cover piece. Among them, the terminal post and the adapter piece are generally connected by means of welding. In the battery cell structure, in order to ensure the corrosion resistance and safety of a battery cell, a sealing ring and a lower plastic are usually used to guarantee the reliability of the insulation between the adapter piece and the top cover piece.

In the actual manufacturing procedure, there is often a certain assembly deviation between the adapter piece and the top cover. When the assembly deviation between the adapter piece and the top cover is too large, the sealing ring on the top cover will be eroded, resulting in a short connection between the adapter piece and the top cover piece, which will lead to corrosion and liquid leakage of the battery cell, thus affecting the service stability and safety of the power battery. At present, after the adapter piece is welded to the top cover, the assembly deviation between the adapter piece and the top cover is usually checked by means of manual visual inspection, which has poor reliability and carries a risk of liquid leakage.

## Technical problem

One of the objectives of embodiments of the present application is: to provide a liquid leakage detection method, apparatus and device, which are intended to solve the problem of poor reliability and liquid leakage risk of checking the assembly deviation between the adapter piece and the top cover by means of manual visual inspection at present.

## Technical solution

In order to solve the above technical problem, the technical solutions adopted in embodiments of the present application are as follows:

In a first aspect, embodiments of the present application provide a liquid leakage detection method, comprising:

acquiring an image to be processed of a battery; recognizing the image to be processed to obtain an adapter piece image and a top cover image; and determining whether there is liquid leakage in the battery according to the adapter piece image and the top cover image.

By performing image recognition on an image to be processed containing a top cover of a battery and an adapter piece provided on the top cover, an adapter piece image and a top cover image are obtained, and then, according to the assembly position of the adapter piece in the adapter piece image and the top cover in the top cover image, it is determined whether the assembly position between the physical adapter piece and the top cover conforms to the intended design. If the assembly position conforms to the intended design, it is determined that there is no liquid leakage in the battery; otherwise, it is determined that there is liquid leakage in the battery, which will affect the stability and safety of the battery in service. This liquid leakage detection method based on image recognition can simply, efficiently, and accurately detect whether there is liquid leakage in the battery, thereby reducing the likelihood of human errors in the manual visual inspection and improving the reliability of the detection results.

In some embodiments of the present application, said recognizing the image to be processed to obtain an adapter piece image and a top cover image comprises:

performing grayscale processing on the image to be processed to obtain a grayscale image; and obtaining the adapter piece image and the top cover image according to a grayscale difference between an adapter piece and a top cover in the grayscale image.

By processing the image to be processed into a grayscale image and then performing grayscale recognition according to the grayscale difference between the adapter piece and the top cover in the grayscale image to obtain an adapter piece image and a top cover image, this image recognition method based on grayscale recognition can simply, efficiently, and accurately recognize images of different components in the image to be processed.

In some embodiments of the present application, the adapter piece comprises a piece body and a protrusion provided on the piece body, and the adapter piece image comprises a piece body image and a protrusion image; and

said obtaining the adapter piece image and the top cover image according to a grayscale difference between an adapter piece and a top cover in the grayscale image comprises:
obtaining the piece body image, the protrusion image and the top cover image according to grayscale differences between the piece body, the protrusion

and the top cover in the grayscale image.

By obtaining a piece body image, a protrusion image and a top cover image through grayscale recognition according to grayscale differences between the piece body, the protrusion and the top cover in the grayscale image, this image recognition method based on grayscale recognition can simply, efficiently, and accurately recognize images of different components in the grayscale image.

In some embodiments of the present application, said determining whether there is liquid leakage in the battery according to the adapter piece image and the top cover image comprises:

    obtaining a positional offset between the adapter piece and the top cover according to the adapter piece image and the top cover image; and
    determining whether there is liquid leakage in the battery according to the positional offset.

The positional offset between the physical adapter piece and top cover is determined according to the positional offset between the adapter piece in the adapter piece image and the top cover in the top cover image, and then according to the positional offset, it is determined whether the assembly position between the adapter piece and the top cover conforms to the intended design. If the assembly position conforms to the intended design, it is determined that there is no liquid leakage in the battery; otherwise, it is determined that there is liquid leakage in the battery, which affects the stability and safety of the battery in service. This liquid leakage detection method based on image recognition and positional offset calculation can simply, efficiently, and accurately detect whether there is liquid leakage in the battery, thereby reducing the possibility of human errors in the manual visual inspection and improving the reliability of the detection results.

In some embodiments of the present application, said obtaining a positional offset between the adapter piece and the top cover according to the adapter piece image and the top cover image; comprises:

    determining a detection region for an adapter piece in the adapter piece image and a detection region for a top cover in the top cover image according to the adapter piece image and the top cover image; and
    acquiring a positional offset between the detection region for the adapter piece in the adapter piece image and the detection region for the top cover in the top cover image to obtain a positional offset between the adapter piece and the top cover.

By further performing image recognition on the adapter piece image and the top cover image, a detection region for an adapter piece in the adapter piece image and a detection region for a top cover in the top cover image are determined, and a positional offset between the physical adapter piece and top cover can be determined simply, efficiently, and accurately according to the positional offset between the two detection regions, wherein the detection regions may include, but are not limited to, preset centers for determining the positional offset between the adapter piece and the top cover, feature regions, or centers of partial regions.

In some embodiments of the present application, the detection region for the adapter piece comprises a center of the protrusion of the adapter piece, and the detection region for the top cover comprises a center of a terminal post hole of the top cover; and

    said determining a detection region for an adapter piece in the adapter piece image and a detection region for a top cover in the top cover image according to the adapter piece image and the top cover image comprises:
    determining an outline of the protrusion in the adapter piece image according to the adapter piece image;
    determining the center of the protrusion in the adapter piece image according to the outline of the protrusion in the adapter piece image;
    determining an outline of the top cover in the top cover image according to the top cover image;
    determining a middle line and an identification region for the top cover in the top cover image according to the outline of the top cover in the top cover image; and
    determining the center of the terminal post hole of the top cover in the top cover image according to the middle line of the top cover in the top cover image and a relative positional relationship between the center of the terminal post hole of the top cover and the identification region.

In the case where the detection region for the adapter piece includes the center of the protrusion of the adapter piece, it is possible to first directly detect the outline of the protrusion in the adapter piece image using an outline detection method, or it is possible to first detect the edges of the adapter piece in the adapter piece image using an edge detection method, and then detect the outline of the protrusion in the edges of the adapter piece using an outline detection method, and then further determine the center of the protrusion in the adapter piece image by a spatial fitting method according to the outline of the protrusion in the adapter piece image, so that this image recognition method based on outline detection and spatial fitting can simply, efficiently and accurately determine the center of the protrusion in the adapter piece image; and in the case where the detection region for the top cover includes the center of the terminal post hole of the top cover, it is possible to first directly detect the outline of the top cover in the top cover image using an outline detection method, or it is possible to first detect the edges of the top cover in the top cover image using an edge detection method, and then detect the outline of the top cover in the edges of the top cover using an outline detection method, and then further determine the middle line of the top cover in the top cover image according to the outline of the top cover in the top cover image by a spatial fitting method, and finally, determine the center of the terminal post hole of the top cover in the top cover image by a spatial fitting method according to the middle line of the top cover in the top cover image and the relative positional relationship between the center of the terminal post hole of the top cover and the identification region, so that this image recognition method based on edge detection, outline detection and spatial fitting can simply, efficiently and accurately determine the center of the terminal post hole of the top cover in the top cover image, wherein the outline of the top cover in the top cover image includes an identification region, the identification region for the top cover being an arbitrary regular shaped (e.g., rectangular, circular, etc.) region, groove, etc., provided in the top cover and used for identifying different types of top covers, and the relative positional relationship between the center of the terminal post hole of the top cover and the identification region may be a distance between the two or a relationship between the positional coordinates.

In some embodiments of the present application, said acquiring a positional offset between the detection region for the adapter piece in the adapter piece image and the detection region for the top cover in the top cover image to obtain a positional offset between the adapter piece and the top cover comprises:

acquiring a distance between the center of the protrusion in the adapter piece image and the center of the terminal post hole in the top cover image to obtain a positional offset between the adapter piece and the top cover.

The positional offset can be embodied as the distance between the center of the protrusion in the adapter piece image and the center of the terminal post hole in the top cover image in the camera coordinate system, in which case the X-axis and Y-axis of the camera coordinate system are set to be parallel to the protrusion bottom, then the distance between the two centers is obtained through taking the square root of the square of the X-axis coordinate difference between the two centers and of the square of the Y-axis coordinate difference. In this way, by taking the distance between the two centers as the positional offset, the amount of calculation is small, so that it is possible to determine the positional offset simply, efficiently, and accurately.

In some embodiments of the present application, said determining whether there is liquid leakage in the battery according to the positional offset comprises:

obtaining a first value of distance between the protrusion and the top cover according to an outer diameter design value of a protrusion opening of the adapter piece and an outer diameter design value of the terminal post hole;
obtaining a second value of distance between the protrusion and the top cover according to a lower plastic thickness design value of the top cover and a protrusion draft angle design value;
determining a preset specification value according to the first value of distance and the second value of distance; and
determining that there is liquid leakage in the battery if the positional offset does not match the preset specification value.

In the case where the distance between the center of the protrusion in the adapter piece image and the center of the terminal post hole in the top cover image is taken as the positional offset, according to the outer diameter design value of the protrusion opening of the adapter piece and the outer diameter design value of the terminal post hole, the difference (i.e., a first distance value) between the outer diameter design value of the terminal post hole and the outer diameter design value of the protrusion opening can be obtained and, according to the lower plastic thickness design value of the top cover and the protrusion draft angle design value, the difference (i.e., a second distance value) between the outer diameter design value of the protrusion opening and the outer diameter design value of the protrusion positions parallel to the bottom of the lower plastic can be obtained, and then the sum of the first distance value and the second distance value is calculated to obtain a design value (i.e., a preset specification value) of the distance (i.e., the positional offset) between the center of the protrusion in the adapter piece image and the center of the terminal post hole in the top cover image, and then according to the magnitude relationship between the positional offset and the preset specification value, it can be determined whether there is liquid leakage in the battery. Specifically, if the positional offset does not match the preset specification value, it is determined that there is liquid leakage in the battery; otherwise, it is determined that there is no liquid leakage in the battery. This method of determining whether there is liquid leakage in the battery based on the magnitude relationship between the positional offset and the preset specification value can simply, efficiently, and accurately detect whether there is liquid leakage in the battery, thereby reducing the likelihood of human errors in the manual visual inspection, and improving the reliability of the detection results.

In some embodiments of the present application, said determining whether there is liquid leakage in the battery according to the positional offset comprises:

obtaining a first value of distance between the protrusion and the top cover according to an inner diameter design value of a protrusion bottom of the adapter piece and an outer diameter design value of the terminal post hole;

obtaining a second value of distance between the protrusion and the top cover according to a lower plastic thickness design value of the top cover and a protrusion draft angle design value;

determining a preset specification value according to the first value of distance and the second value of distance; and

determining that there is liquid leakage in the battery if the positional offset does not match the preset specification value.

In the case where the distance between the center of the protrusion in the adapter piece image and the center of the terminal post hole in the top cover image is taken as the positional offset, according to the inner diameter design value of the protrusion bottom of the adapter piece and the outer diameter design value of the terminal post hole, the difference (i.e., a first distance value) between the outer diameter design value of the terminal post hole and the inner diameter design value of the protrusion bottom can be obtained and, according to the lower plastic thickness design value of the top cover and the protrusion draft angle design value, the difference (i.e., a second distance value) between the outer diameter design value of the protrusion opening and the outer diameter design value of the protrusion positions parallel to the bottom of the lower plastic can be obtained, and then the difference of the first distance value and the second distance value is calculated to obtain a design value (i.e., a preset specification value) of the distance (i.e., the positional offset) between the center of the protrusion in the adapter piece image and the center of the terminal post hole in the top cover image, and then according to the magnitude relationship between the positional offset and the preset specification value, it can be determined whether there is liquid leakage in the battery. Specifically, if the positional offset does not match the preset specification value, it is determined that there is liquid leakage in the battery; otherwise, it is determined that there is no liquid leakage in the battery. This method of determining whether there is liquid leakage in the battery based on the magnitude relationship between the positional offset and the preset specification value can simply, efficiently, and accurately detect whether there is liquid leakage in the battery, thereby reducing the likelihood of human errors in the manual visual inspection, and improving the reliability of the detection results.

In some embodiments of the present application, said acquiring a positional offset between the detection region for the adapter piece in the adapter piece image and the detection region for the top cover in the top cover image to obtain a positional offset between the adapter piece and the top cover comprises:

acquiring a horizontal coordinate difference and a vertical coordinate difference between the center of the protrusion in the adapter piece image and the center of the terminal post hole in the top cover image to obtain the positional offset between the adapter piece and the top cover.

The positional offset can be embodied as the horizontal coordinate difference and vertical coordinate difference in the camera coordinate system between the center of the protrusion in the adapter piece image and the center of the terminal post hole in the top cover image, in which case the X-axis and Y-axis of the camera coordinate system are set to be parallel to the protrusion bottom, then the X-axis coordinate difference between these two centers is the horizontal coordinate difference, and the Y-axis coordinate difference is the vertical coordinate difference. In this way, by taking the horizontal coordinate difference and the vertical coordinate difference as the positional offset, compared to taking the distance between the center of the protrusion in the adapter piece image and the center of the terminal post hole in the top cover image as the positional offset, the amount of calculation is smaller, so that the positional offset can be determined more simply, efficiently, and accurately.

In some embodiments of the present application, said determining whether there is liquid leakage in the battery according to the positional offset comprises:

acquiring design values of the horizontal coordinate difference and the vertical coordinate difference between the center of the protrusion and the center of the terminal post hole to obtain a preset specification value; and

determining that there is liquid leakage in the battery if the positional offset does not match the preset specification value.

In the case where the horizontal coordinate difference and the vertical coordinate difference between the center of the protrusion in the adapter piece image and the center of the terminal post hole in the top cover image are used as the positional offset, a preset specification value is obtained according to the design values of the horizontal coordinate difference and the vertical coordinate difference between the center of the protrusion and the center of the terminal post hole, and according to the magnitude relationship between the positional offset and the preset specification value, it can be determined whether there is liquid leakage in the battery. Specifically, if the positional offset does not match the preset specification value, it is determined that there is liquid leakage in the battery; otherwise, it is determined that there is no liquid leakage in the battery. This method of determining whether there is liquid leakage in the battery based on the magnitude relationship between the positional offset and the preset specification value can simply, efficiently, and accurately detect whether there is liquid leakage in the battery, thereby reducing the likelihood of human errors in the manual visual inspection, and improving the reliability of the detection results.

In some embodiments of the present application, said acquiring an image to be processed of a battery comprises:

acquiring the image to be processed of the battery by a camera; and
said acquiring a positional offset between the detection region for the adapter piece in the adapter piece image and the detection region for the top cover in the top cover image to obtain a positional offset between the adapter piece and the top cover comprises:
obtaining a positional offset between the adapter piece and the top cover in a world coordinate system according to positions of the detection region for the adapter piece in the adapter piece image and the detection region for the top cover in the top cover image in a camera coordinate system and a predetermined relative positional relationship of the same site in the camera coordinate system and the world coordinate system.

The image to be processed of the battery can be acquired instantly by the camera, thus facilitating real-time detection. According to the predetermined relative positional relationship of the same site in the camera coordinate system and the world coordinate system, the virtual positions of the detection region for the adapter piece in the adapter piece image and the detection region for the top cover in the top cover image in the camera coordinate system can be converted to real positions in the world coordinate system, and thus according to the determination of the real positions of the two detection regions in the world coordinate system, the real relative positional relationship (i.e., the positional offset) between the adapter piece and the top cover in the world coordinate system can be determined.

In some embodiments of the present application, before said acquiring the image to be processed of the battery by a camera, the method comprises:

acquiring an image of a calibration plate at a preset position by the camera; and
determining the relative positional relationship of the same site in the camera coordinate system and the world coordinate system according to positions of the same site in the image of the calibration plate and in the calibration plate.

The relative positional relationship of the same site in the camera coordinate system and the world coordinate system is determined by means of a calibration plate, so that the image to be processed of the battery obtained from the camera can be directly processed and the real positional offset between the center of the protrusion and the center of the terminal post hole in the world coordinate system can be output, thus making it convenient for the user to know the detection results intuitively.

In some embodiments of the present application, the method further comprises:
obtaining and outputting, if there is no liquid leakage in the battery, a liquid leakage risk assessment result of the battery according to the positional offset.

The liquid leakage detection method provided in embodiments of the present application, in addition to being capable of determining whether there is liquid leakage in the battery according to the positional offset, can also assess the risk of liquid leakage of the battery according to the positional offset in the case where there is no liquid leakage in the battery, so that the user can take corresponding countermeasures according to the risk of liquid leakage in due course, such as adjusting the assembly position between the adapter piece and the top cover in due course, so as to prevent a possible liquid leakage before it occurs.

In some embodiments of the present application, said obtaining and outputting, if there is no liquid leakage in the battery, a liquid leakage risk assessment result of the battery according to the positional offset comprises:

acquiring, if there is no liquid leakage in the battery, a difference between the positional offset and a preset specification value; and
determining, according to the difference, a liquid leakage risk level of the battery and outputting the liquid leakage risk assessment result characterizing the liquid leakage risk level, wherein the difference is positively correlated with the liquid leakage risk level.

The classification of the liquid leakage risk level is performed according to the difference between the positional offset and the preset specification value, with a larger difference indicating a higher liquid leakage risk level, and vice versa, thus making it convenient for the user to know the level of the risk of liquid leakage of the battery intuitively, so that corresponding countermeasures can be taken in due course.

In a second aspect, embodiments of the present application provide a liquid leakage detection apparatus, comprising:

an image acquisition unit for acquiring an image to be processed of a battery;
an image recognition unit for recognizing the image to be processed to obtain an adapter piece image and a top cover image; and
a liquid leakage detection unit for determining whether there is liquid leakage in the battery according to the adapter piece image and the top cover image.

In a third aspect, the present application provides a liquid leakage detection device, comprising a memory, a processor, and a computer program stored in the memory and runnable on the processor, wherein the liquid leakage detection device further comprises a camera or is communicatively connected to a camera, and the processor, when executing the computer program, implements the steps of the liquid leakage detection method as described above.

In a fourth aspect, the present application provides a computer-readable storage medium storing a computer program, wherein the computer program, when executed by the processor, implements the steps of the liquid leakage detection method as described above.

It can be understood that the beneficial effects of the above second to fourth aspects can be found in the relevant description in the above first aspect and will not be repeated herein.

The above description is only a summary of the technical solutions of the present application. In order to be able to understand the technical means of the present application more clearly, the technical means can be implemented according to the content of the specification. Furthermore, to make the above and other objectives, features and advantages of the present application more comprehensible, specific implementations of the present application are exemplified below.

**Description of Drawings**

Various other advantages and benefits will become apparent to those of ordinary skill in the art upon reading the following detailed description of the preferred implementations. The drawings are for the purpose of illustrating the preferred implementations only and are not to be considered a limitation to the present application. Moreover, in all of the accompanying drawings, the same parts are indicated by the same reference numerals. In the drawings:

Fig. 1 is a schematic diagram of the inner side of an assembly structure of an adapter piece and a top cover of a battery as provided in embodiments of the present application;
Fig. 2 is a schematic diagram of a sectional structure of the assembly structure of the adapter piece and the top cover of the battery along the X direction of a camera coordinate system as provided in embodiments of the present application;
Fig. 3 is a schematic diagram of a sectional structure of the top cover of the battery in the camera coordinate system along the X direction as provided in embodiments of the present application;
Fig. 4 is a schematic diagram of a sectional structure of the adapter piece of the battery in the camera coordinate system along the X direction of the camera coordinate system as provided in embodiments of the present application;
Fig. 5 is a schematic diagram of a relative positional relationship between a center of a terminal post hole and a center of a protrusion in the camera coordinate system as provided in embodiments of the present application;
Fig. 6 is a first schematic flowchart of a liquid leakage detection method as provided in embodiments of the present application;
Fig. 7 is a second schematic flowchart of a liquid leakage detection method as provided in embodiments of the present application;
Fig. 8 is a third schematic flowchart of a liquid leakage detection method as provided in embodiments of the present application;
Fig. 9 is a fourth schematic flowchart of a liquid leakage detection method as provided in embodiments of the present application;
Fig. 10 is a fifth schematic flowchart of a liquid leakage detection method as provided in embodiments of the present application;
Fig. 11 is a schematic diagram of a first kind of identification region as provided in embodiments of the present application;
Fig. 12 is a schematic diagram of a second kind of identification region as provided in embodiments of the present application;
Fig. 13 is a schematic diagram of a third kind of identification region as provided in embodiments of the present application;
Fig. 14 is a sixth schematic flowchart of a liquid leakage detection method as provided in embodiments of the present application;
Fig. 15 is a schematic diagram of the dimensions of the adapter piece and the top cover as provided in embodiments of the present application;
Fig. 16 is a seventh schematic flowchart of a liquid leakage detection method as provided in embodiments of the present application;
Fig. 17 is a schematic diagram of the structure of a liquid leakage detection apparatus as provided in embodiments of the present application; and
Fig. 18 is a schematic diagram of the structure of a liquid leakage detection device as provided in embodiments of the present application.

Reference numerals:

liquid leakage detection apparatus 10, image acquisition unit 11, image recognition unit 12, liquid leakage detection unit 13;
liquid leakage detection device 20, processor 21, memory 22, computer program 23;
adapter piece 100, top cover 200;
protrusion 110, piece body 120, protrusion side wall 111, protrusion opening 112, protrusion bottom 113;
terminal post 202, sealing ring 204, lower plastic 206, top cover piece 208, terminal post hole 210;
circle $C_1$ in which the terminal post hole 210 is located, center $O_1$ at which the terminal post hole 210 is located, circle $C_2$ in which the protrusion opening 112 is located, center $O_2$ at which the protrusion opening 112 is located;

protrusion draft angle design value $\alpha$, outer diameter design value b of the protrusion opening 112, inner diameter design value c of the protrusion bottom 113, outer diameter design value a of the terminal post hole 210, lower plastic 206 thickness design value t of the top cover 200, outer diameter design value d of protrusion 110 positions parallel to the bottom of lower plastic 206;

first kind of identification region 221, second kind of identification region 222, third kind of identification region 223.

## Detailed Description

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example, A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "multiple groups" refers to two or more (including two) groups, and "multiple sheets" refers to two or more (including two) sheets.

In the description of the embodiments of the present application, the orientation or positional relationship indicated by the technical terms "center," "longitudinal," "transverse," "length," "width," "thickness," "upper," "lower," "front," "back," "left," "right," "vertical," "horizontal," "top," "bottom," "inner," "outer," "clockwise," "counterclockwise," "axial," "radial," "circumferential," etc. are based on the orientation or positional relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

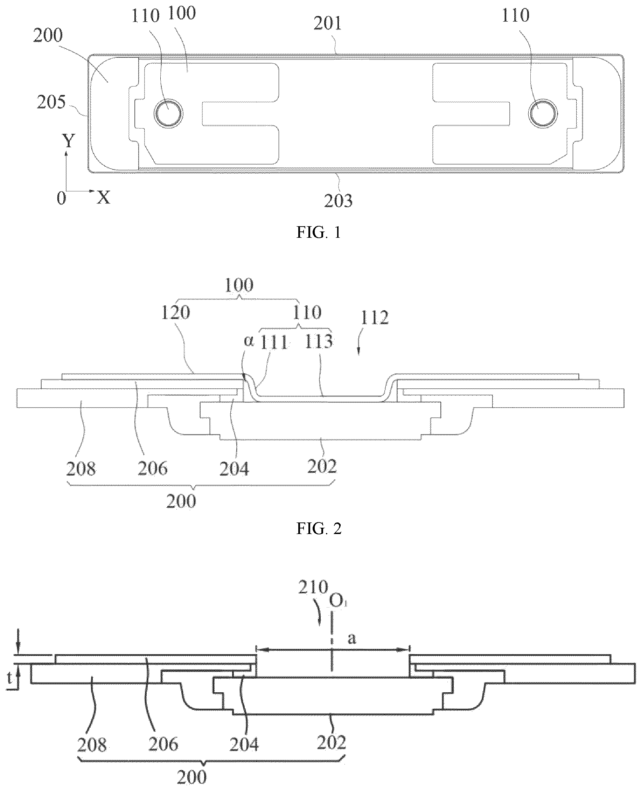

Referring to Figs. 1 to 5, the adapter piece 100 is generally a stamping member and the top cover 200 generally consists of a terminal post 202, a sealing ring 204, a lower plastic 206, and a top cover piece 208, wherein the lower plastic 206 has a thickness design value t. The adapter piece 100 is formed with a protrusion 110 extending in the direction towards the top cover 200 and a piece body 120 connected to the periphery of the protrusion 110, wherein the protrusion 110 comprises a protrusion side wall 111 and a protrusion bottom 113 and the protrusion 110 is formed with a protrusion opening 112, and the angle between the piece body 120 and the protrusion side wall 111 is referred to as the "protrusion draft angle". In this embodiment, the letter $\alpha$ is used to denote this protrusion draft angle design value, and a terminal post hole 210 is provided in the top cover piece 208. During assembly, the protrusion 110 of the adapter piece 100 is embedded into that terminal post hole 210 and contacts the top of the terminal post 202 exposed from that terminal post hole 210, and is connected thereto through welding. The sealing ring 204 is provided between the protrusion 110 and the terminal post hole 210, that is, between the protrusion side wall 111 and the hole wall of the terminal post hole 210, and the lower plastic 206 is provided between the piece body 120 and the top cover piece 208 to guarantee the reliability of the insulation between the adapter piece 100 and the top cover piece 208 and thus to guarantee the corrosion resistance and safety of the battery cell.

Referring to Figs. 1 to 5, in the actual manufacturing procedure, there is often a certain assembly deviation between the adapter piece 100 and the top cover 200, and the assembly deviation is mainly embodied as an assembly deviation between the protrusion 110 of the adapter piece 100 and the terminal post hole 210 of the top cover 200. In the welding process between the adapter piece 100 and the top cover 200, due to a poor welding process, when the assembly deviation between the adapter piece 100 and the top cover 200 is too large, the sealing ring 204 on the top cover 200 will be ablated, resulting in a short connection between the adapter piece 100 and the top cover piece 208, which ultimately results in corrosion and liquid leakage of the battery cell, thus affecting the stability and safety of the power battery in service and forming a risky battery cell. At present, after the adapter piece 100 is welded to the top cover 200, the assembly deviation between the adapter piece 100 and the top cover 200 is usually checked by means of manual visual inspection, which has poor reliability and carries a risk of liquid leakage.

Referring to Figs. 1 to 5, if there is deformation of the protrusion 110 of the adapter piece 100, for example, there is an outer projection (i.e., an inner groove), after the adapter piece 100 is assembled with the top cover 200, the deformed protrusion 110 will result in an uneven gap for mounting of the sealing ring 204 between the protrusion 110 of the adapter piece 100 and the terminal post hole 210 of the top cover 200, which will compress the sealing ring 204 to undergo an irregular deformation and thus result in poor sealing, and thus a risk of liquid leakage.

Referring to Figs. 1 to 5, the short connection between the adapter piece 100 and the top cover piece 208 may specifically be caused by their mutual contact after the sealing ring 204 between the protrusion 110 of the adapter piece 100 and the terminal post hole 210 of the top cover 200 has been ablated, so that if the width of the above gap in which the sealing ring 204 is mounted is less than a certain value, that is, the assembly offset between the adapter piece 100 and the top cover 200 exceeds a certain range, then it can be considered that the sealing ring 204 has been wholly or partially ablated, and thus there is a risk of liquid leakage.

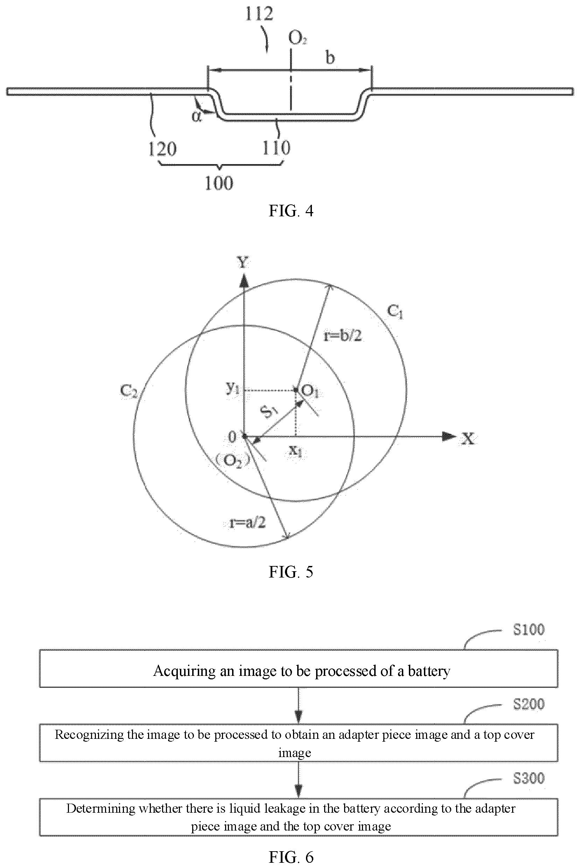

Referring to Figs. 1 to 5, generally, in components of batteries of the same specification, the shape of the protrusion 110 of the adapter piece 100, and the terminal post hole 210 of the top cover 200 are centrally symmetric, the geometric parameters of the protrusion 110 of the adapter piece 100 are fixed, and the geometric parameters of the terminal post hole 210 of the top cover 200 are fixed, and the protrusion draft angle design value $\alpha$ and the thickness design value t of the lower cover plastic 206 are also fixed. Herein, referring to Fig. 5, the geometric parameters of the terminal post hole 210 include a circle $C_1$ and a center $O_1$ in which the terminal post hole 210 is located, wherein the center $O_1$ at which the terminal post hole 210 is located is the center $O_1$ of the terminal post hole 210; and the geometric parameters of the protrusion 110 include a circle $C_2$ and a center $O_2$ in which the protrusion opening 112 is located, wherein the center $O_2$ at which the protrusion opening 112 is located is the center $O_2$ of the protrusion opening 112, and it can be understood that the center $O_2$ at which the protrusion opening 112 is located is also the center of the protrusion 110 and of the protrusion bottom 113 in the image of the sample piece illustrated in Fig. 1. After in-depth research, the applicants have found that it is not easy for the gap between the protrusion 110 of the adapter piece 100 and the hole wall of the terminal post hole 210 of the top cover 200 to be directly detected, and has also found that by detecting the positions at which the center $O_2$ of the protrusion 110 of the adapter piece 100 and the center $O_1$ of the terminal post hole 210 of the top cover 200 are located, and by means of the positional offset between the two centers $O_1$ and $O_2$, it is possible to determine whether the width of the gap between the protrusion 110 of the adapter piece 100 and the hole wall of the terminal post hole 210 of the top cover 200 conforms to a specification value, and it is possible to use the positional offset to assess whether the battery cell is at risk of liquid leakage.

In this way, embodiments of the present application provide a liquid leakage detection method, and it can be applied to a liquid leakage detection device and be executed by a processor of the liquid leakage detection device when running a computer program with corresponding functions, for performing quality inspection of batteries during a production process of the batteries, for example, for performing liquid leakage detection of a battery assembly having an adapter piece and a top cover piece, and it can also be used for performing liquid leakage detection of an assembled battery. By performing image recognition on an image to be processed containing a top cover of a battery and an adapter piece provided on the top cover, an adapter piece image and a top cover image are obtained, and then, according to the assembly position of the adapter piece in the adapter piece image and the top cover in the top cover image, it is determined whether the assembly position between the physical adapter piece and top cover conforms to the intended design. If the assembly position conforms to the intended design, it is determined that there is no liquid leakage in the battery; otherwise, it is determined that there is liquid leakage in the battery, which will affect the stability and safety of the battery in service. This liquid leakage detection method based on image recognition can simply, efficiently, and accurately detect whether there is liquid leakage in the battery, thereby reducing the likelihood of human errors in the manual visual inspection and improving the reliability of the detection results.

In the applications, the liquid leakage detection device may be a personal computer, an industrial computer, a server, etc. capable of being communicatively connected to the camera to acquire an image to be processed captured by the camera, or may be a mobile phone, a laptop computer, a tablet computer, an ultra-mobile personal computer (UMPC), a netbook, a personal digital assistant (PDA), a machine vision inspection equipment, and so on, that is integrally provided with a camera. The camera may be an RGB camera or a depth camera implemented based on a charge coupled device (CCD) or a complementary metal-oxide-semiconductor (CMOS), etc., and the depth camera may be an RGB-D camera.

Referring to Fig. 6, embodiments of the present application provide a liquid leakage detection method, comprising the following steps S100 to S300:

Step S100: acquiring an image to be processed of a battery, and proceeding to step S200.

In the applications, the image to be processed may be pre-collected and stored by the liquid leakage detection device, or it may be collected in real time. The pre-collected and stored image to be processed can be invoked when liquid leakage detection of the battery is required. The number of times of collection and the frequency of collection for real-time collection can be set according to actual needs, and it is possible to carry out collection only once or to carry out collection continuously for a preset number of times at a preset frequency of collection, and then select one or more images of higher clarity from a plurality of images to be processed that have been collected. The images to be processed comprise foreground images and background images, wherein the foreground image contains an adapter piece and a top cover, and the background image may contain components other than the adapter piece and the top cover in the battery or a detection platform for placing the battery.

Step S200: recognizing the image to be processed to obtain an adapter piece image and a top cover image, and proceeding to step S300.

In the applications, image recognition methods such as semantic segmentation, instance segmentation, thresholding, K-means clustering, histogram-based image segmentation, edge detection, deep learning-based image segmentation, and other image segmentation methods can be used to segment the foreground image and the background image in the image to be processed to obtain an adapter piece image and a top cover image belonging to the foreground image. In the case where a plurality of images to be processed of the same battery are collected, if it is not possible to simultaneously obtain an adapter piece image and a top cover image with high clarity based on one and the same image to be processed, it is possible to obtain an adapter piece image and a top cover image with high clarity based on two different images to be processed, respectively.

Step S300: determining whether there is liquid leakage in the battery according to the adapter piece image and the top cover image.

In the applications, according to the assembly position of the adapter piece in the adapter piece image and the top cover in the top cover image, it can be determined whether the assembly position between the physical adapter piece and top cover conforms to the intended design. It is determined that there is no liquid leakage in the battery if the assembly position conforms to the intended design; otherwise, it is determined that there is liquid leakage in the battery, which will affect the stability and safety of the battery in service. This liquid leakage detection method based on image recognition can simply, efficiently, and accurately detect whether there is liquid leakage in the battery, thereby reducing the likelihood of human errors in the manual visual inspection and improving the reliability of the detection results.

In the applications, after determining whether there is liquid leakage in the battery, a corresponding liquid leakage detection result can be output in any human-computer interaction manner supported by the liquid leakage detection device, and the liquid leakage detection result contains two cases of liquid leakage or no liquid leakage. The liquid leakage detection device may be communicatively connected to a display or integrally provided with a display, and the human-computer interaction manner supported by the liquid leakage detection device may include, but is not limited to, displaying or voice announcement.

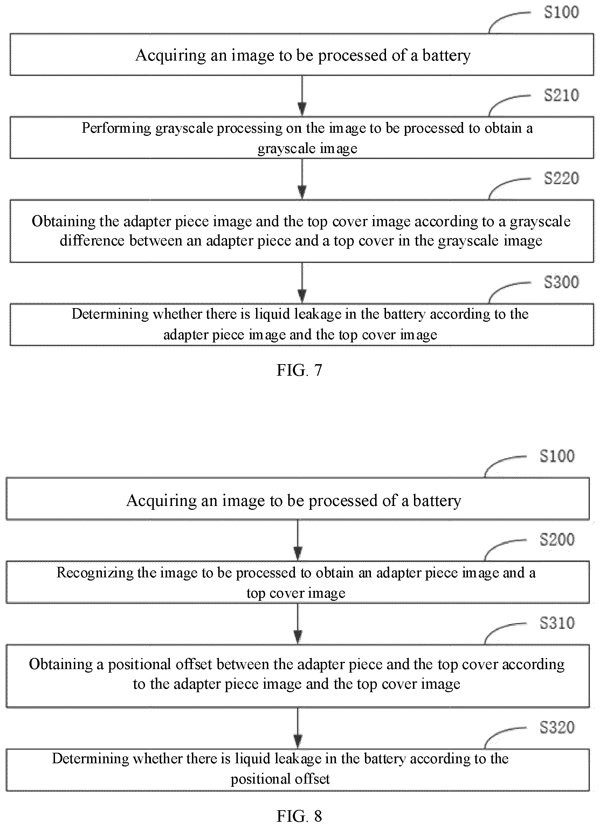

Referring to Fig. 7, in some embodiments of the present application, step S200 includes the following steps S210 to S220:

Step S210: performing grayscale processing on the image to be processed to obtain a grayscale image, and proceeding to step S220.

In the applications, image grayscale processing methods such as the maximum value method, the average value method, and the weighted average method can be used to process the image to be processed into a grayscale image.

Step S220: obtaining the adapter piece image and the top cover image according to a grayscale difference between an adapter piece and a top cover in the grayscale image.

In the applications, there are grayscale differences between the background, the adapter piece, and the top cover in the grayscale image, and based on such grayscale differences, grayscale recognition methods such as semantic segmentation, instance segmentation, thresholding, K-means clustering, histogram-based image segmentation, edge detection, deep learning-based image segmentation and other image segmentation methods are used to segment the foreground image and the background image in the grayscale image to obtain the adapter piece image and the top cover image belonging to the foreground image. In the case where a plurality of images to be processed of the same battery are collected, if it is not possible to simultaneously obtain an adapter piece image and a top cover image with high clarity based on one and the same image to be processed, it is possible to obtain two different grayscale images based on two different images to be processed, respectively, and then obtain an adapter piece image and a top cover image with higher clarity based on the two different grayscale images, respectively, or it is possible to obtain a plurality of grayscale images based on a plurality of images to be processed of the same battery, and then select two different grayscale images therefrom to obtain an adapter piece image and a top cover image with higher clarity. This image recognition method based on grayscale recognition can simply, efficiently, and accurately recognize images of different components in the image to be processed.

In some embodiments of the present application, step S220 may comprise or equivalently be replaced with: obtaining the piece body image, the protrusion image and the top cover image according to grayscale differences between a piece body, a protrusion and the top cover in the grayscale image.

In the applications, the adapter piece image includes a piece body image and a protrusion image, and it is possible to first obtain the adapter piece image and the top cover image based on the grayscale image, and then obtain the piece body image and the protrusion image according to the grayscale difference between the piece body and the protrusion in the adapter piece image, or it is also possible to directly obtain the background image, the piece body image, the protrusion image, and the top cover image according to the grayscale differences between the background, the piece body, the protrusion, and the top cover in the grayscale image. The protrusion image and the top cover image are selected and, according to the assembly position of the protrusion in the protrusion image and the top cover in the top cover image, it is determined whether the assembly position between the physical adapter piece and top cover conforms to the intended design.

Referring to Fig. 8, in some embodiments of the present application, step S300 includes the following steps S310 and S320:

Step S310: obtaining a positional offset between the adapter piece and the top cover according to the adapter piece image and the top cover image, and proceeding to step S320.

In the applications, the positional offset between the adapter piece and the top cover may specifically be embodied as a positional offset between preset detection regions in the adapter piece. The detection regions may include, but are not limited to, preset centers (e.g., the center of the protrusion and the center of a terminal post hole) for determining the positional offset between the adapter piece and the top cover, feature regions (e.g., any edges or corner points), or centers of partial regions (e.g., an upper-left region, a lower-left region, an upper-right region, or a lower-right region). The positional offset may be embodied as a linear distance or a relative positional relationship, and the relative positional relationship may be coordinate differences in the same coordinate system. In the case where the detection regions are centers, step S301 may be equivalently replaced with: obtaining a positional offset between the protrusion and the top cover according to the protrusion image and the top cover image.

Step S320: determining whether there is liquid leakage in the battery according to the positional offset.

In the applications, the positional offset between the physical adapter piece and top cover is determined according to the positional offset between the adapter piece in the adapter piece image and the top cover in the top cover image, and then according to the positional offset, it is determined whether the assembly position between the adapter piece and the top cover conforms to the intended design. If the assembly position conforms to the intended design, it is determined that there is no liquid leakage in the battery; otherwise, it is determined that there is liquid leakage in the battery, which affects the stability and safety of the battery in service. This liquid leakage detection method based on image recognition and positional offset calculation can simply, efficiently, and accurately detect whether there is liquid leakage in the battery, thereby reducing the possibility of human errors in the manual visual inspection and improving the reliability of the detection results.

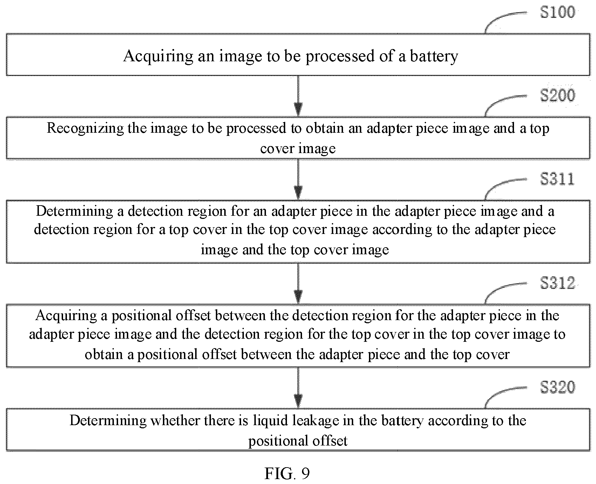

Referring to Fig. 9, in some embodiments of the present application, step S310 includes the following steps S311 and S312:

Step S311: determining a detection region for an adapter piece in the adapter piece image and a detection region for a top cover in the top cover image according to the adapter piece image and the top cover image, and proceeding to step S312.

In the applications, according to the different detection regions, different detection methods can be used to locate the detection region, for example, an edge detection method is used to detect edges, a corner point detection method is used to detect corner points, and a grounding referring expressions method is used to detect partial regions. In the case where the edges and corner points are localized, the position of the center can be fitted using a spatial fitting method according to the positions of the location of the edges or corner points. In the case where the detection regions are centers, step S311 may be equivalently replaced with: determining, according to the protrusion image, a detection region for the protrusion in the protrusion image.

Step S312: acquiring a positional offset between the detection region for the adapter piece in the adapter piece image and the detection region for the top cover in the top cover image to obtain a positional offset between the adapter piece and the top cover.

In the applications, by further performing image recognition on the adapter piece image and the top cover image, a detection region for an adapter piece in the adapter piece image and a detection region for a top cover in the top cover image are determined, and a positional offset between the physical adapter piece and top cover may be determined simply, efficiently, and accurately according to the positional offset between the two detection regions.

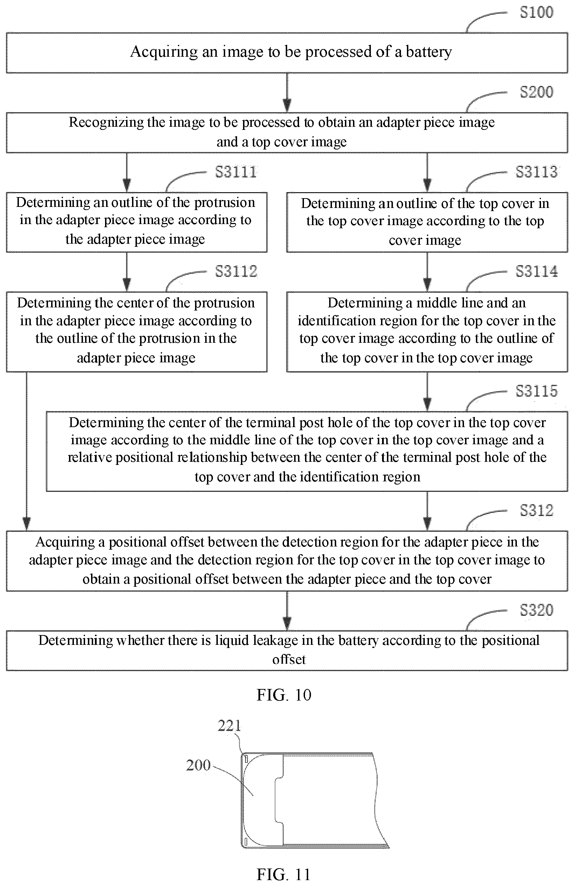

Referring to Fig. 10, in some embodiments of the present application, step S311 includes the following steps S3111 to S3114:

Step S3111: determining an outline of the protrusion in the adapter piece image according to the adapter piece image, and proceeding to step S3112.

In the applications, in the case where the detection region for the adapter piece includes the center of the protrusion, it is possible to directly detect the outline of the protrusion in the adapter piece image using an outline detection method, or it is also possible to first detect the edges of the adapter piece in the adapter piece image using an edge detection method, and then detect the outline of the protrusion in the edges of the adapter piece using an outline detection method. The outline detection method may be as follows: based on a preset shape of the outline of the adapter piece, matching a shape in the adapter piece image that is the same as the shape of the outline of the adapter piece to determine the outline of the adapter piece, and since the outline of the adapter piece comprises an outline of the piece body and an outline of the protrusion, according to the preset shape of the outline of the protrusion, further matching a shape from the outline of the adapter piece that is the same as the shape of the outline of the protrusion to determine the outline of the protrusion. Since the adapter piece image includes a protrusion image, the outline detection method may also be as follows: based on a preset shape of the outline of the protrusion, matching a shape in the protrusion image that is the same as the shape of the outline of the image to determine the outline of the protrusion.

Step S3112: determining the center of the protrusion in the adapter piece image according to the outline of the protrusion in the adapter piece image.

In the applications, after determining the outline of the protrusion in the adapter piece image, the center of the protrusion in the adapter piece image is determined through fitting by a spatial fitting method according to the outline of the protrusion in the adapter piece image, wherein the center of the protrusion is the geometric center of the protrusion, and the specific position thereof is related to the shape of the protrusion. For example, if the protrusion is a circle, the center of the protrusion is the center at which the protrusion is located, and if the protrusion is a regular polygon, the center of the protrusion is the center of the outer tangent circle of the protrusion. This image recognition method based on outline detection and spatial fitting can simply, efficiently and accurately determine the center of the protrusion in the adapter piece image.

Step S3113: determining an outline of the top cover in the top cover image according to the top cover image, and proceeding to step S3114.

In the applications, in the case where the detection region for the top cover includes the center of the terminal post hole of the top cover, it is possible to directly detect the outline of the top cover in the top cover image using an outline detection method, or it is possible to first detect the edges of the top cover in the top cover image using an edge detection method, and then detect the outline of the top cover in the edges of the top cover using the outline detection method. The outline detection method may specifically be as follows: based on a preset shape of the outline of the top cover, matching a shape in the top cover image that is the same as the shape of the outline of the top cover to determine the outline of the top cover, and since the outline of the top cover comprises an outline of the piece body and an outline of the protrusion, according to the preset shape of the outline of the protrusion, further matching a shape from the outline of the top cover that is the same as the shape of the outline of the protrusion to determine the outline of the protrusion.

Step S3114: determining a middle line and an identification region for the top cover in the top cover image according to the outline of the top cover in the top cover image, and proceeding to step S3115; and

step S3115: determining the center of the terminal post hole of the top cover in the top cover image according to the middle line of the top cover in the top cover image and a relative positional relationship between the center of the terminal post hole of the top cover and the identification region.

In the applications, after determining the outline in the edges of the top cover in the top cover image, the middle line of the top cover in the top cover image is further determined according to the outline of the top cover in the top cover image by the spatial fitting method, and finally the center of the terminal post hole of the top cover in the top cover image is determined according to the middle line of the top cover in the top cover image and the relative positional relationship between the center of the terminal post hole of the top cover and the identification region by the spatial fitting method. This image recognition method based on edge detection, outline detection and spatial fitting can simply, efficiently and accurately determine the center of the terminal post hole of the top cover in the top cover image.

Referring to Fig. 1, the method for determining a middle line of the top cover 200 in the top cover image may be as follows: determining three sides of the top cover 200 in the top cover image according to the outline of the top cover 200 in the top cover image, the three sides of the top cover 100 comprising two sides 201 and 203 opposite each other in the outline edges of the top cover, and a side 205 connected to the two sides; determining midpoints of the two opposite sides 201 and 203 of the three sides of the top cover 200 in the top cover image according to the two opposite sides 201 and 203 of the three sides of the top cover 200 in the top cover image; and determining a middle line of the top cover 200 in the top cover image according to the midpoints of the two opposite sides 201 and 203 of the three sides of the top cover 200 in the top cover image as well as the remaining one side 205.

In the applications, a straight line recognition tool may be used to determine any three edges of the top cover in the top cover image, a midpoint recognition tool may be used to determine the midpoints of two opposite edges of the three edges of the top cover in the top cover image, and a straight line recognition tool may be used to determine a middle line of the top cover in the top cover image.

In the applications, the outline of the top cover in the top cover image includes an identification region, where the identification region for the top cover is an arbitrarily regular shaped (e.g., rectangular, circular, etc.) region, groove, or the like provided in the top cover and used to recognize different types of top covers, and where the relative positional relationship between the center of the terminal post hole of the top cover and the identification region may be the relationship of distance or positional coordinates between the two.

Fig. 11 exemplarily illustrates part of the outline of the top cover 200 in the top cover image, wherein the first kind of identification region 221 is illustrated as a rectangle.

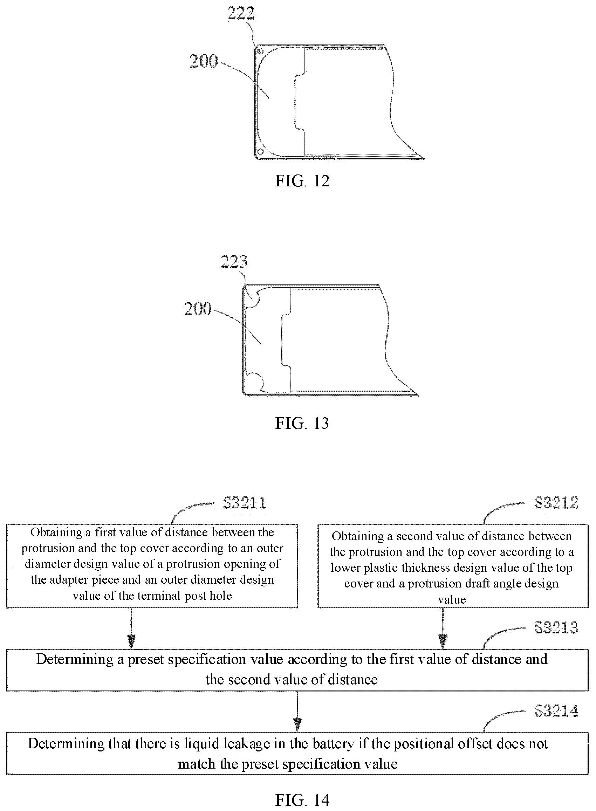

Fig. 12 exemplarily illustrates part of the outline of the top cover 200 in the top cover image, wherein the second kind of identification region 222 is illustrated as a circle.

Fig. 13 exemplarily illustrates part of the outline of the top cover 200 in the top cover image, wherein the third kind of identification region 223 is illustrated as a groove.

In some embodiments of the present application, step S312 comprises the following step:

acquiring a distance between the center of the protrusion in the adapter piece image and the center of the terminal post hole in the top cover image to obtain a positional offset between the adapter piece and the top cover.

In the applications, in the case where the detection region for the adapter piece includes the center of the protrusion and the detection region for the top cover includes the center of the terminal post hole of the top cover, the positional offset may be embodied as a distance in the camera coordinate system between the center of the protrusion in the adapter piece image and the center of the terminal post hole in the top cover image. The method for calculating the distance may be as follows: the X-axis and Y-axis of the camera coordinate system are set to be parallel to the protrusion bottom, then the distance between the two centers is obtained by taking the square root of the square of the X-axis coordinate difference between the two centers and of the square of the Y-axis coordinate difference. For example, the coordinates of the center of the terminal post hole is set as $(x_1,y_1)$ and the coordinates of the center of the protrusion as $(x_2,y_2)$, then the distance between the two centers is $S_1=[(x_2-x_1)^2+(y_2-y_1)^2]^{1/2}$. In this way, by taking the distance between the two centers as the positional offset, the amount of calculation is small, so that it is possible to determine the positional offset simply, efficiently, and accurately.

Fig. 5 exemplarily illustrates a distance $S_1$ between the center $O_2$ of the protrusion and the center $O_1$ of the terminal post hole when the center $O_2$ of the protrusion is set to be the coordinate origin (0,0) of the camera coordinate system and the center $O_1$ of the terminal post hole is set to have the coordinates $(x_1,y_1)$.

Referring to Fig. 14, in some embodiments of the present application, step S320 includes the following steps S3211 to S3214:

Step S3211: obtaining a first value of distance between the protrusion and the top cover according to an outer diameter design value of a protrusion opening of the adapter piece and an outer diameter design value of the terminal post hole, and proceeding to step S3213;

Step S3212: obtaining a second value of distance between the protrusion and the top cover according to a lower plastic thickness design value of the top cover and a protrusion draft angle design value, and proceeding to step S3213;

Step S3213: determining a preset specification value according to the first value of distance and the second value of distance, and proceeding to step S3214; and

Step S3214: determining that there is liquid leakage in the battery if the positional offset does not match the preset specification value.

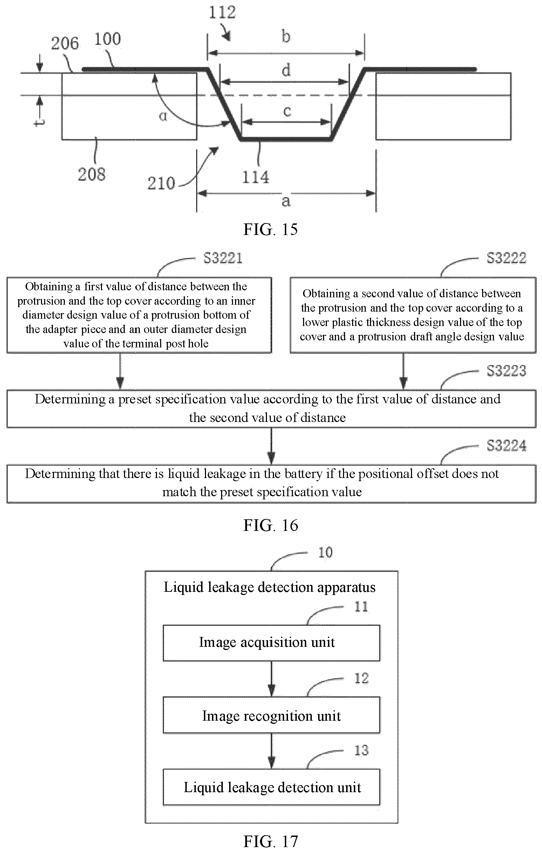

Referring to Fig. 15, in the case where the distance between the center of the protrusion 110 in the adapter piece image and the center of the terminal post hole 210 in the top cover image is taken as the positional offset, according to the outer diameter design value b of the protrusion opening 112 of the adapter piece and the outer diameter design value a of the terminal post hole 210, the difference between the outer diameter design value a of the terminal post hole 210 and the outer diameter design value b of the protrusion opening 112, that is, a first distance value $R_1$, can be obtained:

$$R_1 = a - b;$$

according to the lower plastic 206 thickness design value t and the protrusion draft angle design value $\alpha$ of the top cover, the difference between the outer diameter design value b of the protrusion opening 112 and the outer diameter design value d of the protrusion positions parallel to the bottom of the lower plastic 206, i.e., the second distance value $R_2$, can be obtained:

$$R_2 = 2 * t * \tan(\alpha - 90°);$$

the sum of the first distance value $R_1$ and the second distance value $R_2$ is solved to obtain the design value of the distance (i.e., the positional offset) between the center of the protrusion 110 in the adapter piece image and the center of the terminal post hole 210 in the top cover image, i.e., the preset specification value R:

$$R = R_1 + R_2 = a - b + 2 * t * \tan(\alpha - 90°);$$

according to the magnitude relationship between the positional offset and the preset specification value, it can be determined whether there is liquid leakage in the battery, and specifically: if the positional offset does not match the preset specification value, it is determined that there is liquid leakage in the battery; otherwise, it is determined that there is no liquid leakage in the battery. The first method for judging whether the positional offset matches the preset specification value is as follows: if the positional offset is greater than the preset specification value, then the positional offset does not match the preset specification value; and if the positional offset is less than or equal to the preset specification value, then the positional offset matches the preset specification value. The second method for judging whether the positional offset matches the preset specification value is as follows: if the difference between the positional offset and the preset specification value is greater than the maximum design error of the preset specification value, the positional offset does not match the preset specification value; and if the difference between the positional offset and the preset specification value is less than or equal to the maximum design error of the preset specification value, the positional offset matches the preset specification value. This method of determining whether there is liquid leakage in the battery based on the magnitude relationship between the positional offset and the preset specification value can simply, efficiently, and accurately detect whether there is liquid leakage in the battery, thereby reducing the likelihood of human errors in the manual visual inspection and improving the reliability of the detection results.

Referring to Fig. 16, in some embodiments of the present application, step S320 includes the following steps S3221 to S3224:

Step S3221: obtaining a first value of distance between the protrusion and the top cover according to an inner diameter design value of a protrusion bottom of the adapter piece and an outer diameter design value of the terminal post hole, and proceeding to step S3223;
Step S3222: obtaining a second value of distance between the protrusion and the top cover according to a lower plastic thickness design value of the top cover and a protrusion draft angle design value, and proceeding to step S3223;
Step S3223: determining a preset specification value according to the first value of distance and the second value of distance, and proceeding to step S3224; and
Step S3224: determining that there is liquid leakage in the battery if the positional offset does not match the preset specification value.

Referring to Fig. 15, in the case where the distance between the center of the protrusion 110 in the adapter piece image and the center of the terminal post hole 210 in the top cover image is taken as the positional offset, according to the inner diameter design value c of the protrusion bottom 113 of the adapter piece and the outer diameter design value a of the terminal post hole 210, the difference between the outer diameter design value a of the terminal post hole 210 and the inner diameter design value c of the protrusion bottom 113, that is, a first distance value $R_1$, can be obtained:

$$R_1 = a - c;$$

according to the lower plastic 206 thickness design value t and the protrusion draft angle design value $\alpha$ of the top cover, the difference between the outer diameter design value b of the protrusion opening 112 and the outer diameter design value d of the protrusion positions parallel to the bottom of the lower plastic 206, i.e., the second distance value $R_2$, can be obtained:

$$R_2 = 2 * t * \tan(\alpha - 90°);$$

the difference of the first distance value $R_1$ and the second distance value $R_2$ is solved to obtain the design value of the distance (i.e., the positional offset) between the center of the protrusion 110 in the adapter piece image and the center of the terminal post hole 210 in the top cover image, i.e., the preset specification value R:

$$R = R_1 + R_2 = a - c - 2 * t * \tan(\alpha - 90°);$$

according to the magnitude relationship between the positional offset and the preset specification value, it can be determined whether there is liquid leakage in the battery, and specifically: if the positional offset does not match the preset specification value, it is determined that there is liquid leakage in the battery; otherwise, it is determined that there is no liquid leakage in the battery. The first method for judging whether the positional offset matches the preset specification value is as follows: if the positional offset is greater than the preset specification value, then the positional offset does not match the preset specification value; and if the positional offset is less than or equal to the preset specification value, then the positional offset matches the preset specification value. The second method for judging whether the positional offset matches the preset specification value is as follows: if the difference between the positional offset and the preset specification value is greater than the maximum design error of the preset specification value, the positional offset does not match the preset specification value; and if the difference between the positional offset and the preset specification value is less than or equal to the maximum design error of the preset specification value, the positional offset matches the preset specification value. This method of determining whether there is liquid leakage in the battery based on the magnitude relationship between the positional offset and the preset specification value can simply, efficiently, and accurately detect whether there is liquid leakage in the battery, thereby reducing the likelihood of human errors in the manual visual inspection and improving the reliability of the detection results.

In some embodiments of the present application, step S312 comprises the following step:
acquiring a horizontal coordinate difference and a vertical coordinate difference between the center of the protrusion in the adapter piece image and the center of the terminal post hole in the top cover image to obtain the positional offset between the adapter piece and the top cover.

In the applications, in the case where the detection region for the adapter piece includes the center of the protrusion and the detection region for the top cover includes the center of the terminal post hole of the top cover, the positional offset may be embodied as a horizontal coordinate difference and a vertical coordinate difference in the camera coordinate system between the center of the protrusion in the adapter piece image and the center of the terminal post hole in the top cover image. The method for calculating the distance can be as follows: the X-axis and Y-axis of the camera coordinate system are set to be parallel to the protrusion bottom, then the X-axis coordinate difference between the two centers is the horizontal coordinate difference and the Y-axis coordinate difference is the vertical coordinate difference. For example, the coordinates of the center of the terminal post hole are set to be $(x_1, y_1)$, and the coordinates of the center of the protrusion are set to be $(x_2, y_2)$, then the horizontal coordinate difference between the two centers is $x_2 - x_1$, and the vertical coordinate difference is $y_2 - y_1$, and the positional offset is denoted as $(x_2 -$

$x_1, y_2 - y_1)$. In this way, by taking the horizontal coordinate difference and the vertical coordinate difference as the positional offset, compared to taking the distance between the center of the protrusion in the adapter piece image and the center of the terminal post hole in the top cover image as the positional offset, the amount of calculation is smaller, so that the positional offset can be determined more simply, efficiently, and accurately.

In some embodiments of the present application, step S320 comprises the following steps:

> acquiring design values of the horizontal coordinate difference and the vertical coordinate difference between the center of the protrusion and the center of the terminal post hole to obtain a preset specification value; and
> determining that there is liquid leakage in the battery if the positional offset does not match the preset specification value.

In the applications, in the case where the horizontal coordinate difference $x_2 - x_1$ and the vertical coordinate difference $y_2 - y_1$ between the center of the protrusion in the adapter piece image and the center of the terminal post hole in the top cover image are taken as the positional offset $(x_2 - x_1, y_2 - y_1)$, a preset specification value $(x_0, y_0)$ is obtained according to the design value $x_0$ of the horizontal coordinate difference and the design value $y_0$ of the vertical coordinate difference between the center of the protrusion and the center of the terminal post hole, and according to the magnitude relationship between the positional offset $(x_2 - x_1, y_2 - y_1)$ and the preset specification value $(x_0, y_0)$, it can be determined whether there is liquid leakage in the battery. Specifically, if the positional offset $(x_2 - x_1, y_2 - y_1)$ does not match the preset specification value $(x_0, y_0)$, it is determined that there is liquid leakage in the battery; otherwise, it is determined that there is no liquid leakage in the battery. This method of determining whether there is liquid leakage in the battery based on the magnitude relationship between the positional offset and the preset specification value can simply, efficiently, and accurately detect whether there is liquid leakage in the battery, thereby reducing the likelihood of human errors in the manual visual inspection and improving the reliability of the detection results.

In the applications, the first method for judging whether the positional offset $(x_2 - x_1, y_2 - y_1)$ matches the preset specification value $(x_0, y_0)$ is as follows: if the horizontal coordinate difference $x_2 - x_1$ is greater than the design value $x_0$ of the horizontal coordinate difference, or if the vertical coordinate difference $y_2 - y_1$ is greater than the design value $y_0$ of the vertical coordinate difference, the positional offset $(x_2 - x_1, y_2 - y_1)$ does not match the preset specification value $(x_0, y_0)$; and if the horizontal coordinate difference $x_2 - x_1$ is less than or equal to the design value $x_0$ of the horizontal coordinate difference and the vertical coordinate difference $y_2 - y_1$ is less than or equal to the design value $y_0$ of the vertical

coordinate difference, the positional offset $(x_2-x_1,y_2-y_1)$ matches the preset specification value $(x_0,y_0)$.

In the applications, the second method for judging whether the positional offset $(x_2-x_1,y_2-y_1)$ matches the preset specification value $(x_0,y_0)$ is as follows: if the difference between the horizontal coordinate difference $x_2-x_1$ and the design value $x_0$ of the horizontal coordinate difference is greater than the maximum design error of the design value $x_0$ of the horizontal coordinate difference, or if the difference between the vertical coordinate difference $y_2-y_1$ and the design value $y_0$ of the vertical coordinate difference is greater than the maximum design error of the design value $y_0$ of the vertical coordinate difference, the positional offset $(x_2-x_1,y_2-y_1)$ does not match the preset specification value $(x_0,y_0)$; and if the difference between the horizontal coordinate difference $x_2-x_1$ and the design value $x_0$ of the horizontal coordinate difference is less than or equal to the maximum design error of the design value $x_0$ of the horizontal coordinate difference, and the difference between the vertical coordinate difference $y_2-y_1$ and the design value $y_0$ of the vertical coordinate difference is less than or equal to the maximum design error of the design value $y_0$ of the vertical coordinate difference, the positional offset $(x_2-x_1,y_2-y_1)$ matches the preset specification value $(x_0,y_0)$.

In some embodiments of the present application, step S100 comprises the following steps:

acquiring the image to be processed of the battery by a camera; and
step S312, comprising:
obtaining a positional offset between the adapter piece and the top cover in a world coordinate system according to positions of the detection region for the adapter piece in the adapter piece image and the detection region for the top cover in the top cover image in a camera coordinate system and a predetermined relative positional relationship of the same site in the camera coordinate system and the world coordinate system.

In the applications, the image to be processed of the battery can be acquired instantly by the camera, thus facilitating real-time detection. According to the predetermined relative positional relationship of the same site in the camera coordinate system and the world coordinate system, the virtual positions of the detection region for the adapter piece in the adapter piece image and the detection region for the top cover in the top cover image in the camera coordinate system can be converted to real positions in the world coordinate system, and thus according to the determination of the real positions of the two detection regions in the world coordinate system, the real relative positional relationship (i.e., the positional offset) between the adapter piece and the top cover in the world coordinate system can be determined.

In some embodiments of the present application, before acquiring the image to be processed of the battery by a camera, the method comprises:

acquiring an image of a calibration plate at a preset position by the camera; and
determining the relative positional relationship of the same site in the camera coordinate system and the world coordinate system according to positions of the same site in the image of the calibration plate and in the calibration plate.

In the applications, the calibration plate may be a film calibration plate. The relative positional relationship of the same site in the camera coordinate system and the world coordinate system is determined by means of a calibration plate, so that the image to be processed of the battery obtained from the camera can be directly processed and the real positional offset between the center of the protrusion and the center of the terminal post hole in the world coordinate system can be output, thus making it convenient for the user to know the detection results intuitively.

In some embodiments of the present application, step S300 is followed by:
obtaining and outputting, if there is no liquid leakage in the battery, a liquid leakage risk assessment result of the battery according to the positional offset.

In the applications, the liquid leakage detection method provided in embodiments of the present application, in addition to being capable of determining whether there is liquid leakage in the battery according to the positional offset, can also assess the risk of liquid leakage of the battery according to the positional offset in the case where there is no liquid leakage in the battery, so that the user can take corresponding countermeasures according to the risk of liquid leakage in due course, such as adjusting the assembly position between the adapter piece and the top cover in due course, so as to prevent a possible liquid leakage before it occurs. The liquid leakage risk assessment result may be positively correlated with the magnitude of the positional offset or of the difference between the positional offset and the preset specification value, and the liquid leakage detection device may output the liquid leakage risk assessment result via its supported human-computer interaction manner (e.g., displaying or voice announcement).

In some embodiments of the present application, obtaining and outputting, if there is no liquid leakage in the battery, a liquid leakage risk assessment result of the battery according to the positional offset comprises:

acquiring, if there is no liquid leakage in the battery, a difference between the positional offset and a preset specification value; and
determining, according to the difference, a liquid leakage risk level of the battery and outputting the liquid leakage risk assessment result characterizing the liquid leakage risk level, wherein the difference is positively correlated with the liquid leakage risk level.

In the applications, the liquid leakage risk assessment result may be a liquid leakage risk level, and a larger difference between the positional offset and the preset specification value indicates a higher liquid leakage risk level, and vice versa; therefore, a plurality of liquid leakage risk levels in one-to-one correspondence with a plurality of consecutive difference intervals may be preset according to practical needs, so that the liquid leakage risk level of the battery can be determined according to the difference interval into which the difference between the positional offset and the preset specification value falls. The liquid leakage detection device can output the liquid leakage risk assessment result characterizing the liquid leakage risk level through its supported human-computer interaction manner (e.g., displaying or voice announcement). The classification of the liquid leakage risk level is performed according to the difference between the positional offset and the preset specification value, thus making it convenient for the user to know the liquid leakage risk level of the battery intuitively, so that corresponding countermeasures can be taken in due course.

It should be understood that, in the above method embodiments, the values of the serial numbers of the steps do not imply the order of execution, and the order in which the processes are performed shall be determined by their functions and intrinsic logic, and shall not constitute any limitation to the implementation process of the embodiments of the present application.

Embodiments of the present application further provide a liquid leakage detection apparatus for performing the steps in the above embodiment of the liquid leakage detection method. The liquid leakage detection apparatus may be a virtual appliance in the liquid leakage detection device and is run by a processor of the liquid leakage detection device, or may be the liquid leakage detection device itself.

Referring to Fig. 17, embodiments of the present application provide a liquid leakage detection apparatus 10, comprising:

an image acquisition unit 11 for acquiring an image to be processed of a battery;
an image recognition unit 12 for recognizing the image to be processed to obtain an adapter piece image and a top cover image; and
a liquid leakage detection unit 13 for determining whether there is liquid leakage in the battery according to the adapter piece image and the top cover image.

In some embodiments of the present application, the image acquisition unit is further used for acquiring an image of a calibration plate at a preset position by the camera; and
the image recognition unit is further used for determining the relative positional relationship of the same site in the camera coordinate system and the world coordinate system according to positions of the same site in the image of the calibration plate and in the calibration plate.

In some embodiments of the present application, the liquid leakage detection unit is further used for obtaining and outputting, if there is no liquid leakage in the battery, a liquid leakage risk assessment result of the battery according to the positional offset.

In the applications, the units in the liquid leakage detection apparatus may be software program units, or may be implemented by different logic circuits integrated in a processor, or may be implemented by a plurality of distributed processors.

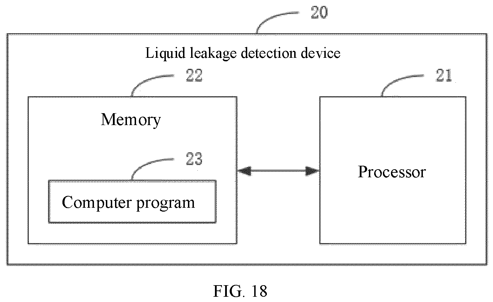

Referring to Fig. 18, embodiments of the present application further provide a liquid leakage detection device 20, comprising: at least one processor 21 (only one processor is shown in Fig. 18), a memory 22, and a computer program 23 stored in the memory 22 and runnable on the at least one processor 21, wherein the processor 21, when executing the computer program 23, implements the steps in the various embodiments of the liquid leakage detection method described above.

In the applications, the liquid leakage detection device may include, but is not limited to, the memory and the processor. It will be understood by those skilled in the art that Fig. 18 is merely an example of a liquid leakage detection device and does not constitute a limitation of the liquid leakage detection device, which may include more or fewer components than illustrated, or a combination of certain components, or different components, and may, for example, also include input/output devices, a network access device, and the like. The input/output devices may include cameras, audio collection/player devices, display devices, keyboards, keys, and the like. The network access device may include a communication unit for communicating with other devices.

In the applications, the processor may be a central processing unit (CPU), and may also be other general purpose processors, digital signal processors (DSPs), application specific integrated circuits (ASICs), field-programmable gate arrays (FPGAs) or other programmable logic devices, discrete gates or transistor logic devices, discrete hardware components, among others. The general purpose processor may be a microprocessor or any conventional processor, etc.

In the applications, the memory may be an internal storage unit of the liquid leakage detection device in some embodiments, such as a hard disk or a memory of the liquid leakage detection device. In some other embodiments, the memory may also be an external storage device of the liquid leakage detection device, such as a plug-in hard disk, a smart media card (SMC), a secure digital (SD) card, a flash card, and the like, equipped on the liquid leakage detection device. Further, the memory may further include both an internal storage unit of the liquid leakage detection device and an external storage device. The memory is used to store the operating system, application programs, the boot loader, data and other programs, such as program codes of computer programs. The memory may also be used to temporarily store data that has been or will be output.

In the applications, the communication unit may be set up as any device capable of communicating directly or indirectly with other devices in a wired or wireless manner according to the actual needs. For example, the communication unit may provide a communication solution that is applied to a network device and that includes communication interfaces (for example, universal serial bus (USB), local area network (LAN), wireless local area network (WLAN) (e.g., Wi-Fi network), Bluetooth, Zigbee, mobile communication network, Global Navigation Satellite System (GNSS), frequency modulation (FM), near field communication (NFC), infrared technology (IR), etc.) The communication unit may include an antenna, which may have only one array element or an antenna array including a plurality of array elements. The communication unit may receive electromagnetic waves through an antenna, perform frequency modulation and filtering processing on the electromagnetic wave signals, and send the processed signals to a processor. The communication unit may also receive from the processor a signal to be sent, perform frequency modulation and amplification thereof, and convert it into electromagnetic waves and radiate it out via the antenna.

It is to be noted that, as to the contents of the information interaction and execution processes and the like between the above apparatuses/units, since they are based on the same idea as the method embodiments of the present application, for the specific functions and technical effects brought about by them, reference can be specifically made to the section of method embodiments, and will not be repeated herein.

It is clearly understood by those skilled in the field to which it belongs that, for the sake of convenience and brevity of description, only the division of the above functional units is illustrated by way of example, and that, in actual applications, it is possible to assign the above functions to be accomplished by different functional units according to the needs, i.e., to divide the internal structure of the apparatus into different functional units in order to accomplish the above functions, in whole or in part. The functional units in the embodiments may be integrated in a single processing unit, or each unit may physically exist separately, or two or more units may be integrated in a single unit, and the above integrated units may be implemented either in the form of hardware or in the form of software functional units. In addition, the specific names of the functional units are only for the purpose of facilitating mutual differentiation and are not intended to limit the scope of protection of the present application. For the specific working processes of the units in the above system, reference can be made to the corresponding processes in the aforementioned method embodiments, which will not be repeated herein.

Embodiments of the present application further provide a computer-readable storage medium storing a computer program, wherein the computer program, when executed by a processor, implements the liquid leakage detection method of any of the above embodiments.

Embodiments of the present application further provide a computer program product that, when running on a liquid leakage detection device, causes the liquid leakage detection device to perform the liquid leakage detection method of any of the above embodiments.

The integrated units may be stored in a computer-readable storage medium when implemented in the form of software function units and sold or used as stand-alone products. Based on such understanding, the present application implements all or part of the processes in the method of the above embodiments, which may be accomplished by instructing the relevant hardware to do so by means of a computer program that may be stored in a computer-readable storage medium, wherein the computer program, when executed by a processor, can implement the steps of the various method embodiments described above. Among other things, the computer program includes computer program code, which may be in the form of source code, in the form of object code, in the form of an executable file or in some intermediate form. The computer-readable medium may at least include: any entity or apparatus capable of carrying computer program code to a liquid leakage detection device, a recording medium, a computer memory, a read-only memory (ROM), a random access memory (RAM), an electric carrier signal, a telecommunication signal, and a software distribution medium, for example, a USB disk, a mobile hard drive, a magnetic disk, or an optical disc.

In the above embodiments, the description of each embodiment has its own emphasis. For parts that are not described in detail or recorded in a certain embodiment, reference may be made to the relevant descriptions of other embodiments.

Those of ordinary skill in the art can realize that units and algorithm steps of each example described with reference to the examples disclosed herein can be implemented in electronic hardware, or a combination of computer software and electronic hardware. Whether these functions are performed in hardware or software methods depends on a specific application and a design constraint condition of the technical solution. Those skilled in the art can implement the described functions using different methods for each particular application, but such implementations should not be considered beyond the scope of the present application.

In the embodiments provided in the present application, it should be understood that the apparatus, the liquid leakage detection device, and the method as disclosed may be implemented by other methods. For example, the apparatus and liquid leakage detection device embodiments described above are merely illustrative, e.g., the division of the units, is merely a logical functional division, and there may be another division method for actual implementation, for example, two or more units or components may be combined or may be integrated into another system, or some features may be ignored, or not implemented. On the other hand, the shown or discussed mutual coupling or direct coupling or communication connection may be indirect coupling or communication connection through some interfaces, apparatuses, or units, and may be in electrical, mechanical, or in other forms.

The above embodiments are only used to illustrate the technical solutions of the present application, and not to limit them; although the present application has been described in detail with reference to the foregoing embodiments, a person of ordinary skill in the art should understand that it is still possible to make modifications to the technical solutions documented in the foregoing embodiments or to make equivalent replacements for some of the technical features therein; and such modifications or replacements do not detach the essence of the corresponding technical solutions from the spirit and scope of the technical solutions of the various embodiments of the present application, all of which should be included within the scope of protection of the present application.

**Claims**

1. A liquid leakage detection method, comprising:

   acquiring an image to be processed of a battery;
   recognizing the image to be processed to obtain an adapter piece image and a top cover image; and
   determining whether there is liquid leakage in the battery according to the adapter piece image and the top cover image.

2. The liquid leakage detection method of claim 1, wherein said recognizing the image to be processed to obtain an adapter piece image and a top cover image comprises:

   performing grayscale processing on the image to be processed to obtain a grayscale image; and
   obtaining the adapter piece image and the top cover image according to a grayscale difference between an adapter piece and a top cover in the grayscale image.

3. The liquid leakage detection method of claim 2, wherein the adapter piece comprises a piece body and a protrusion provided on the piece body, and the adapter piece image comprises a piece body image and a protrusion image; and
   said obtaining the adapter piece image and the top cover image according to a grayscale difference between an adapter piece and a top cover in the grayscale image comprises:

obtaining the piece body image, the protrusion image and the top cover image according to grayscale differences between the piece body, the protrusion and the top cover in the grayscale image.

4. The liquid leakage detection method of any one of claims 1 to 3, wherein said determining whether there is liquid leakage in the battery according to the adapter piece image and the top cover image comprises:

   obtaining a positional offset between the adapter piece and the top cover according to the adapter piece image and the top cover image; and
   determining whether there is liquid leakage in the battery according to the positional offset.

5. The liquid leakage detection method of claim 4, wherein said obtaining a positional offset between the adapter piece and the top cover according to the adapter piece image and the top cover image comprises:

   determining a detection region for an adapter piece in the adapter piece image and a detection region for a top cover in the top cover image according to the adapter piece image and the top cover image; and
   acquiring a positional offset between the detection region for the adapter piece in the adapter piece image and the detection region for the top cover in the top cover image to obtain a positional offset between the adapter piece and the top cover.

6. The liquid leakage detection method of claim 5, wherein the detection region for the adapter piece comprises a center of the protrusion of the adapter piece, and the detection region for the top cover in the top cover image comprises a center of a terminal post hole of the top cover; and
   said determining a detection region for an adapter piece in the adapter piece image and a detection region for a top cover in the top cover image according to the adapter piece image and the top cover image comprises:

   determining an outline of the adapter piece in the adapter piece image and an outline of the top cover in the top cover image according to the adapter piece image and the top cover image;
   determining the center of the protrusion in the adapter piece image according to the outline of the adapter piece in the adapter piece image;
   determining a middle line and an identification region for the top cover in the top cover image according to the outline of the top cover in the top cover image; and

determining the center of the terminal post hole of the top cover in the top cover image according to the middle line of the top cover in the top cover image and a relative positional relationship between the center of the terminal post hole of the top cover and the identification region.

7. The liquid leakage detection method of claim 6, wherein said acquiring a positional offset between the detection region for the adapter piece in the adapter piece image and the detection region for the top cover in the top cover image to obtain a positional offset between the adapter piece and the top cover comprises:

acquiring a distance between the center of the protrusion in the adapter piece image and the center of the terminal post hole in the top cover image to obtain a positional offset between the adapter piece and the top cover.

8. The liquid leakage detection method of claim 7, wherein said determining whether there is liquid leakage in the battery according to the positional offset comprises:

obtaining a first value of distance between the protrusion and the top cover according to an outer diameter design value of a protrusion opening of the adapter piece and an outer diameter design value of the terminal post hole;
obtaining a second value of distance between the protrusion and the top cover according to a lower plastic thickness design value of the top cover and a protrusion draft angle design value;
determining a preset specification value according to the first value of distance and the second value of distance; and
determining that there is liquid leakage in the battery if the positional offset does not match the preset specification value.

9. The liquid leakage detection method of claim 7, wherein said determining whether there is liquid leakage in the battery according to the positional offset comprises:

obtaining a first value of distance between the protrusion and the top cover according to an inner diameter design value of a protrusion bottom of the adapter piece and an outer diameter design value of the terminal post hole;
obtaining a second value of distance between the protrusion and the top cover according to a lower plastic thickness design value of the top cover and a protrusion draft angle design value;
determining a preset specification value according to the first value of distance and the second value of distance; and
determining that there is liquid leakage in the battery if the positional offset does not match the preset specification value.

10. The liquid leakage detection method of claim 6, wherein said acquiring a positional offset between the detection region for the adapter piece in the adapter piece image and the detection region for the top cover in the top cover image to obtain a positional offset between the adapter piece and the top cover comprises:

acquiring a horizontal coordinate difference and a vertical coordinate difference between the center of the protrusion in the adapter piece image and the center of the terminal post hole in the top cover image to obtain the positional offset between the adapter piece and the top cover.

11. The liquid leakage detection method of claim 10, wherein said determining whether there is liquid leakage in the battery according to the positional offset comprises:

acquiring design values of the horizontal coordinate difference and the vertical coordinate difference between the center of the protrusion and the center of the terminal post hole to obtain a preset specification value; and
determining that there is liquid leakage in the battery if the positional offset does not match the preset specification value.

12. The liquid leakage detection method of any one of claims 5 to 11, wherein said acquiring an image to be processed of a battery comprises:

acquiring the image to be processed of the battery by a camera; and
said acquiring a positional offset between the detection region for the adapter piece in the adapter piece image and the detection region for the top cover in the top cover image to obtain a positional offset between the adapter piece and the top cover comprises:
obtaining a positional offset between the adapter piece and the top cover in a world coordinate system according to positions of the detection region for the adapter piece in the adapter piece image and the detection region for the top cover in the top cover image in a camera coordinate system and a predetermined relative positional relationship of the same site in the camera coordinate system and the world coordinate system.

13. The liquid leakage detection method of claim 12, wherein before said acquiring the image to be processed of the battery by a camera, the method comprises:

acquiring an image of a calibration plate at a preset position by the camera; and
determining the relative positional relationship of the same site in the camera coordinate system and the world coordinate system according to positions of the same site in the image of the calibration plate and in the calibration plate.

**14.** The liquid leakage detection method of claim 4, further comprising:
obtaining and outputting, if there is no liquid leakage in the battery, a liquid leakage risk assessment result of the battery according to the positional offset.

**15.** The liquid leakage detection method of claim 14, wherein said obtaining and outputting, if there is no liquid leakage in the battery, a liquid leakage risk assessment result of the battery according to the positional offset comprises:

acquiring, if there is no liquid leakage in the battery, a difference between the positional offset and a preset specification value; and
determining, according to the difference, a liquid leakage risk level of the battery and outputting the liquid leakage risk assessment result characterizing the liquid leakage risk level, wherein the difference is positively correlated with the liquid leakage risk level.

**16.** A liquid leakage detection apparatus, comprising:

an image acquisition unit for acquiring an image to be processed of a battery;
an image recognition unit for recognizing the image to be processed to obtain an adapter piece image and a top cover image; and
a liquid leakage detection unit for determining whether there is liquid leakage in the battery according to the adapter piece image and the top cover image.

**17.** A liquid leakage detection device, comprising a memory, a processor, and a computer program stored in the memory and runnable on the processor, wherein the liquid leakage detection device further comprises a camera or is communicatively connected to a camera, and the processor, when executing the computer program, implements the steps of the liquid leakage detection method of any one of claims 1 to 15.

**18.** A computer-readable storage medium storing a computer program, wherein the computer program, when executed by a processor, implements the steps of the liquid leakage detection method of any one of claims 1 to 15.

FIG. 1

FIG. 2

EP 4 517 543 A1

FIG. 4

FIG. 5

FIG. 6

23

```
                                                          ┌─ S100
┌──────────────────────────────────────────────────────────┐
│            Acquiring an image to be processed of a battery │
└──────────────────────────────────────────────────────────┘
                              │
                              ▼                           ┌─ S210
┌──────────────────────────────────────────────────────────┐
│   Performing grayscale processing on the image to be processed to obtain a │
│                        grayscale image                     │
└──────────────────────────────────────────────────────────┘
                              │
                              ▼                           ┌─ S220
┌──────────────────────────────────────────────────────────┐
│  Obtaining the adapter piece image and the top cover image according to a grayscale │
│  difference between an adapter piece and a top cover in the grayscale image │
└──────────────────────────────────────────────────────────┘
                              │
                              ▼                           ┌─ S300
┌──────────────────────────────────────────────────────────┐
│   Determining whether there is liquid leakage in the battery according to the │
│            adapter piece image and the top cover image     │
└──────────────────────────────────────────────────────────┘
```

FIG. 7

```
                                                          ┌─ S100
┌──────────────────────────────────────────────────────────┐
│            Acquiring an image to be processed of a battery │
└──────────────────────────────────────────────────────────┘
                              │
                              ▼                           ┌─ S200
┌──────────────────────────────────────────────────────────┐
│   Recognizing the image to be processed to obtain an adapter piece image and a │
│                        top cover image                     │
└──────────────────────────────────────────────────────────┘
                              │
                              ▼                           ┌─ S310
┌──────────────────────────────────────────────────────────┐
│  Obtaining a positional offset between the adapter piece and the top cover according │
│        to the adapter piece image and the top cover image  │
└──────────────────────────────────────────────────────────┘
                              │
                              ▼                           ┌─ S320
┌──────────────────────────────────────────────────────────┐
│   Determining whether there is liquid leakage in the battery according to the │
│                        positional offset                   │
└──────────────────────────────────────────────────────────┘
```

FIG. 8

S100

Acquiring an image to be processed of a battery

S200

Recognizing the image to be processed to obtain an adapter piece image and a top cover image

S311

Determining a detection region for an adapter piece in the adapter piece image and a detection region for a top cover in the top cover image according to the adapter piece image and the top cover image

S312

Acquiring a positional offset between the detection region for the adapter piece in the adapter piece image and the detection region for the top cover in the top cover image to obtain a positional offset between the adapter piece and the top cover

S320

Determining whether there is liquid leakage in the battery according to the positional offset

FIG. 9

S100

Acquiring an image to be processed of a battery

S200

Recognizing the image to be processed to obtain an adapter piece image
and a top cover image

S3111

Determining an outline of the protrusion
in the adapter piece image according to
the adapter piece image

S3113

Determining an outline of the top cover in
the top cover image according to the top
cover image

S3112

Determining the center of the protrusion
in the adapter piece image according to
the outline of the protrusion in the
adapter piece image

S3114

Determining a middle line and an
identification region for the top cover in the
top cover image according to the outline of
the top cover in the top cover image

S3115

Determining the center of the terminal post hole of the top cover in the top cover
image according to the middle line of the top cover in the top cover image and a
relative positional relationship between the center of the terminal post hole of the
top cover and the identification region

S312

Acquiring a positional offset between the detection region for the adapter piece in the
adapter piece image and the detection region for the top cover in the top cover image to
obtain a positional offset between the adapter piece and the top cover

S320

Determining whether there is liquid leakage in the battery according to the positional
offset

FIG. 10

221

200

FIG. 11

222

200

FIG. 12

223

200

FIG. 13

| S3211 | S3212 |
|---|---|
| Obtaining a first value of distance between the protrusion and the top cover according to an outer diameter design value of a protrusion opening of the adapter piece and an outer diameter design value of the terminal post hole | Obtaining a second value of distance between the protrusion and the top cover according to a lower plastic thickness design value of the top cover and a protrusion draft angle design value |

S3213

Determining a preset specification value according to the first value of distance and the second value of distance

S3214

Determining that there is liquid leakage in the battery if the positional offset does not match the preset specification value

FIG. 14

FIG. 15

FIG. 16

| S3221 | S3222 |
|---|---|
| Obtaining a first value of distance between the protrusion and the top cover according to an inner diameter design value of a protrusion bottom of the adapter piece and an outer diameter design value of the terminal post hole | Obtaining a second value of distance between the protrusion and the top cover according to a lower plastic thickness design value of the top cover and a protrusion draft angle design value |

S3223

Determining a preset specification value according to the first value of distance and the second value of distance

S3224

Determining that there is liquid leakage in the battery if the positional offset does not match the preset specification value

FIG. 16

10

Liquid leakage detection apparatus

11

Image acquisition unit

12

Image recognition unit

13

Liquid leakage detection unit

FIG. 17

FIG. 18

**INTERNATIONAL SEARCH REPORT**

International application No.

**PCT/CN2022/136990**

**A. CLASSIFICATION OF SUBJECT MATTER**

G06F 15/16(2006.01)i; G06T7/00(2017.01)i

According to International Patent Classification (IPC) or to both national classification and IPC

**B. FIELDS SEARCHED**

Minimum documentation searched (classification system followed by classification symbols)

IPC: G06F G06T G01M

Documentation searched other than minimum documentation to the extent that such documents are included in the fields searched

Electronic data base consulted during the international search (name of data base and, where practicable, search terms used)

CNTXT, DWPI, ENTXT, ENTXTC, WPABS, WPABSC, CNKI: 电池, 顶盖, 检测, 检查, 漏液, 判别, 判断, 识别, 图像, 转接片, battery, detection, discrimination, drain, examination, image, recognition, top cover, adapter sheet

**C. DOCUMENTS CONSIDERED TO BE RELEVANT**

| Category* | Citation of document, with indication, where appropriate, of the relevant passages | Relevant to claim No. |
|---|---|---|
| X | CN 110793722 A (NATIONAL COMPUTER NETWORK AND INFORMATION SECURITY MANAGEMENT CENTER) 14 February 2020 (2020-02-14) description, paragraphs [0006]-[0020] | 1-18 |
| X | CN 111445462 A (NATIONAL COMPUTER NETWORK AND INFORMATION SECURITY MANAGEMENT CENTER) 24 July 2020 (2020-07-24) description, paragraphs [0005]-[0055] | 1-18 |
| A | CN 113390351 A (SUZHOU GOVISION SEMICONDUCTOR TECHNOLOGY CO., LTD.) 14 September 2021 (2021-09-14) entire document | 1-18 |
| A | CN 114943858 A (ALIBABA (CHINA) CO., LTD.) 26 August 2022 (2022-08-26) entire document | 1-18 |
| A | CN 115219110 A (GUANGZHOU SHANHE INFORMATION TECHNOLOGY CO., LTD.) 21 October 2022 (2022-10-21) entire document | 1-18 |

☑ Further documents are listed in the continuation of Box C.    ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 July 2023** | **19 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2022/136990**

| C. | DOCUMENTS CONSIDERED TO BE RELEVANT | |
|---|---|---|
| Category* | Citation of document, with indication, where appropriate, of the relevant passages | Relevant to claim No. |
| A | US 11050278 B1 (CONFINEMENT TELEPHONY TECHNOLOGY, LLC) 29 June 2021 (2021-06-29)<br>entire document | 1-18 |

Form PCT/ISA/210 (second sheet) (July 2022)

**INTERNATIONAL SEARCH REPORT**
Information on patent family members

International application No.

**PCT/CN2022/136990**

| Patent document cited in search report | | | Publication date (day/month/year) | Patent family member(s) | | | Publication date (day/month/year) |
|---|---|---|---|---|---|---|---|
| CN | 110793722 | A | 14 February 2020 | None | | | |
| CN | 111445462 | A | 24 July 2020 | None | | | |
| CN | 113390351 | A | 14 September 2021 | None | | | |
| CN | 114943858 | A | 26 August 2022 | None | | | |
| CN | 115219110 | A | 21 October 2022 | None | | | |
| US | 11050278 | B1 | 29 June 2021 | US | 11658496 | B1 | 23 May 2023 |
| | | | | US | 11658497 | B1 | 23 May 2023 |

Form PCT/ISA/210 (patent family annex) (July 2022)